# EUROPÄISCHE PATENTSCHRIFT

(11) **EP 2 785 481 B1**
(45) Veröffentlichungstag und Bekanntmachung des Hinweises auf die Patenterteilung: **15.01.2020**
(21) Anmeldenummer: 12805434.3
(22) Anmeldetag: 29.11.2012
(51) Int. Cl.: B22F 3/105, B29C 67/00, B23K 26/32

(54) **VERFAHREN ZUR HERSTELLUNG EINES FORMKÖRPERS DURCH SCHICHTWEISES AUFBAUEN AUS WERKSTOFFPULVER**
PROCESS FOR PRODUCING A SHAPED BODY BY LAYERWISE BUILDUP FROM MATERIAL POWDER
PROCÉDÉ DE FABRICATION D'UN CORPS FAÇONNÉ PAR MONTAGE EN COUCHES DE MATIÈRE EN POUDRE

(30) Priorität: 29.11.2011 DE 102011087374
(43) Veröffentlichungstag der Anmeldung: 08.10.2014
(73) Patentinhaber: Realizer GmbH, 33178 Borchen (DE)
(72) Erfinder: FOCKELE, Matthias, 33178 Borchen (DE)
(74) Vertreter: Weickmann & Weickmann PartmbB
(86) Internationale Anmeldenummer: PCT/EP2012/073937
(87) Internationale Veröffentlichungsnummer: WO 2013/079581

(56) Entgegenhaltungen:
- WO-A1-2004/056512
- DE-A1- 10 112 591
- DE-A1- 10 320 085

## Beschreibung

Die Erfindung betrifft ein Verfahren zur Herstellung eines Formkörpers durch schichtweises Aufbauen aus Werkstoffpulver nach dem Oberbegriff des Anspruchs 1 und ferner eine Vorrichtung mit den Merkmalen des Oberbegriffs des Anspruchs 10.

Es sind gattungsgemäße Vorrichtungen und Verfahren zur Herstellung von Gegenständen durch schichtweises Aufbauen aus pulverförmigem, insbesondere metallischem oder/und keramischem Werkstoff bekannt. Die Vorrichtungen umfassen ein Prozessraumgehäuse mit einem Prozessraum, eine Trägeranordnung als Basis für den Schichtaufbau und zur Bereitstellung eines Baufeldes in dem Prozessraum, eine Bestrahlungseinrichtung mit dem Baufeld oben gegenüberliegenden Komponenten zur Bestrahlung der jeweils zuletzt auf der Trägeranordnung präparierten Werkstoffpulverschicht in einem dieser Schicht zugeordneten Querschnittsbereich des betreffenden herzustellenden Formkörpers mit Strahlung, die das Werkstoffpulver in diesem Querschnittsbereich durch Erhitzen zum Verschmelzen oder ggf. zum Versintern bringt, und eine Schutzgassfördereinrichtung zum Durchleiten von Schutzgas durch den Prozessraum.

Zum Stand der Technik derartiger Vorrichtungen kann z. B. auf die DE 199 05 067 A1, die DE 102 36 907 A1, die DE 102 08 150 A1, die DE 101 12 591 A1, die EP 1 839 781 A2 oder die DE 196 49 865 A1 verwiesen werden.

Unter den Begriffen selektives Laserschmelzen, selektives Pulverschmelzen, selektives Lasersintern u. dgl. sind in jüngerer Zeit leistungsfähige Methoden zur Herstellung von Formkörpern auch komplizierter Geometrie bekannt geworden, wobei diese häufig unter dem Begriff "Rapid Prototyping" oder "Rapid Tooling" oder "Rapid Manufacturing" zusammengefassten Methoden im Wesentlichen auf folgendem Prinzip basieren:
Der herzustellende Gegenstand (Formkörper) wird nach Maßgabe von CAD-Daten bzw. von davon abgeleiteten Geometriebeschreibungsdaten schichtweise aus einem feinkörnigen, pulverigen Rohmaterial aufgebaut, indem das Rohmaterial entsprechend einem der jeweiligen Schicht zugeordneten Querschnittsmuster des Gegenstandes durch ortsselektives Bestrahlen verfestigt bzw. verschmolzen wird. Dabei werden auch die einzelnen Schichten miteinander verbunden. Das Bestrahlen erfolgt normalerweise mittels Laserstrahlung, wobei die Steuerung einer den Laserstrahl ablenkenden Strahlablenkeinrichtung mittels einer Steuereinrichtung auf der Basis von Geometriebeschreibungsdaten des herzustellenden Gegenstandes erfolgt. Die Steuerinformationen werden üblicherweise von einem Mikrocomputer oder Prozessrechner nach Maßgabe eines entsprechenden Programms aus CAD-Daten abgeleitet und bereitgestellt.

Der Laserstrahl zeichnet auf der zuletzt präparierte Rohmaterialschicht das dieser Schicht zugeordnete Querschnittsmuster des Gegenstandes, um das Rohmaterial dem Querschnittsmuster entsprechend selektiv zu verschmelzen. Nach einem solchen Bestrahlungsschritt erfolgt dann üblicherweise die Präparation der nächsten Werkstoffpulverschicht auf der zuletzt durch Bestrahlen selektiv und bereichsweise verschmolzenen Schicht. Nach Ausbildung einer an ihrer Oberfläche hinreichend glatten Werkstoffpulverschicht erfolgt dann wieder ein Bestrahlungsschritt in der vorstehend erläuterten Weise. Der Gegenstand entsteht somit Schicht für Schicht, wobei die aufeinanderfolgend hergestellten Querschnittsschichten des Gegenstandes so miteinander verschmolzen werden, dass sie aneinander haften. Als Pulvermaterialien kommen diverse Metalle in Frage, darunter z. B. Stahl, Titan, Gold, Tantal und weitere. Auch keramisches Werkstoffpulver oder mehrkomponentiges Pulver kann beim selektiven Laserschmelzen eingesetzt werden. Ferner sind mit der Methode des selektiven Laserschmelzens nahezu alle erdenklichen Formen von Gegenständen herstellbar, wodurch sie für die Herstellung von kompliziert geformten Maschinenelementen, Prothesen, Schmuckstücken usw. prädestiniert sind.

Das selektive Laserschmelzen wird abgekürzt auch als SLM bezeichnet.

Die Generierung eines Formkörpers mit Hilfe der SLM-Technik setzt eine vollständige Kontrolle der Geometriedaten eines Bauteils voraus. Die einzelnen Schichten werden datenmäßig aus einer dreidimensionalen Geometrie, z.B. eines STL-Datensatzes erzeugt. Während eines Bestrahlungsvorgangs tastet der Laserstrahl die umzuschmelzenden Bereiche in der jeweiligen Pulverschicht ab. Bei diesem Abtastvorgang entstehen Spuren oder auch nur Volumenelemente aus aufgeschmolzenem Metallpulver, die sich Volumenelement für Volumenelement und Schicht für Schicht zu einem dichten Metallteil nach Maßgabe der Geometriebeschreibungsdaten des Formkörpers vereinigen. Als Bestrahlungsparameter kommen z. B. die Laserleistung, eine Lasermodulation, Fokussierung oder/und die Abtastgeschwindigkeit des Laserstrahls in Frage. Erfolgt der Bestrahlungsvorgang nicht durch kontinuierliches Weiterbewegen des Laserstrahls, sondern durch schrittweises Weiterbewegen von Bestrahlungsort zu Bestrahlungsort, so definiert sich die Abtastgeschwindigkeit durch einen Abstand der Bestrahlungsorte und eine Verweildauer des Laserstrahls am Bestrahlungsort, sowie ggf. durch die Sprungzeit des Laserstrahls von Bestrahlungsort zu Bestrahlungsort.

Ein Problem bei der schichtweisen Herstellung von Formkörpern aus Pulvermaterialien nach dem SLM-Verfahren besteht darin, dass die physikalischen Eigenschaften des in Entstehung befindlichen Formkörpers von Schritt zu Schritt mit jedem umgeschmolzenen Volumenelement variieren. Ein Grund hierfür ist die permanente Änderung der Wärmeleitfähigkeit und auch der Wärmekapazität des Formkörpers durch Zunahme des durch Umschmelzen verfestigten Volumens während des Aufbauprozesses. Die mit einem bestimmten Energieeintrag pro Zeiteinheit am jeweiligen Bestrahlungsort herbeigeführte Temperaturerhöhung hängt stark vom Wärmeableitvermögen der Umgebung des Bestrahlungsortes sowie weiterhin auch von der Wärmekapazität der Umgebung des Bestrahlungsortes sowie vom Bestrahlungsabsorptionsvermögen am Bestrahlungsort ab.

Problematisch ist dabei, dass das Wärmeableitvermögen des Pulvermaterials sich oft erheblich von dem Wärmeableitvermögen des im Verlauf des Bauprozesses bereits durch Umschmelzen verfestigten Materials des schon hergestellten Bereichs des Formkörpers unterscheidet. Ist der jeweilige Bestrahlungsort im Wesentlichen ausschließlich von Werkstoffpulver umgeben, so kann die am Bestrahlungsort entstehende Wärme nicht sehr gut abfließen und es kann leicht zu einer lokalen Überhitzung des Werkstoffpulvers weit über dessen Schmelztemperatur hinaus kommen. Ist hingegen der betrachtete Bestrahlungsort im Wesentlichen von bereits verfestigtem Material umgeben, so kann die Wärme aufgrund des besseren Wärmeableitvermögens der Umgebung besser abfließen und es kommt nicht so leicht zu Überhitzungen am Bestrahlungsort. Aufgrund dieser Effekte kam es häufig dazu, dass unterschiedliche Bereiche eines Formkörpers abhängig von dessen Geometrie mit durchaus erheblich unterschiedlichen Temperaturen umgeschmolzen wurden, was zur Ausbildung von mechanischen Spannungen in dem Formkörper und zu ungleichmäßigen Schrumpfvorgängen geführt hat.

In der DE 103 20 085 A1 ist ein Verfahren zur Herstellung von Formkörpern nach dem SLM-Prinzip beschrieben, wobei in Abhängigkeit vom Ablauf des Schmelzvorganges bei der Bestrahlung einer betreffenden Pulverschicht die Energiedichte des Laserstrahls und/oder dessen Ablenkgeschwindigkeit und/oder der Spurabstand und/oder die Streifenbreite automatisch geändert werden. Die Änderung soll in Abhängigkeit vom Quermaß und der Temperatur der Oberfläche des Schmelzbades am Bestrahlungsort erfolgen. Das Quermaß wird durch eine CCD-Kamera und die Temperatur durch ein Pyrometer ermittelt. Deren Daten werden einem Rechner zugeführt, der bei Änderung der ermittelten Werte mindestens einen der vorgenannten Laserstrahl-Parameter ändert.

Als Alternative dazu ist in der DE 103 20 085 A1 die Änderung der Laserstrahl-Parameter in Abhängigkeit vom jeweiligen Verhältnis der Fläche zur Randlänge des durch Umschmelzen verfestigten Flächenbereiches in einer jeweiligen Schicht (Schmelzschicht) angegeben. Das Verhältnis der Fläche zur Randlänge einer Schmelzschicht kann aus den vorliegenden Geometriebeschreibungsdaten im Voraus für jede Schicht bestimmt werden. Es hat sich jedoch gezeigt, dass die letztgenannte Vorgehensweise für das Umschmelzverhalten nur tendenziell Verbesserung und dies nur bei relativ einfachen Formkörpergeometrien brachte, da der Ansatz für kompliziertere Geometrien zu grob war.

Die erstere Alternative der Änderung der Laserstrahl-Parameter in Abhängigkeit von den in Echtzeit optisch bzw. pyrometrisch ermittelten Größen Quermaß und Temperatur der Schmelzbadoberfläche am jeweiligen Bestrahlungsort entspricht einer differenzierteren und selektiveren Vorgehensweise, die etwas besser auch bei komplizierteren Geometrien des Formkörpers funktionieren kann. Allerdings bedingt diese Alternative einen großen apparativen und messtechnischen Aufwand sowie einen großen Echtzeit-Datenverarbeitungsaufwand für die Messwerterfassungs- und Auswertungsvorgänge bezüglich der CCD-Kameradaten und der pyrometrischen Messwerte.

Bei dem SLM-Verfahren gemäß der DE 101 12 591 A1 erfolgt eine tendenzielle Berücksichtigung der variierenden Wärmeleiteigenschaften des in Entstehung befindlichen Formkörpers in der Weise, dass die pro Zeit- und Flächeneinheit am jeweiligen Auftreffpunkt des Strahls auf der aktuell zu bestrahlenden Schicht zugeführte Strahlungsenergie in Abhängigkeit davon variiert wird, ob der jeweils aktuell bestrahlte Bereich der Schicht auf einem zusammenhängend verfestigten Bereich oder auf nicht verfestigtem Rohmaterial der vorausgehend bestrahlten Schicht liegt. Liegt der aktuelle Strahlauftreffpunkt oberhalb eines zusammenhängend verfestigten Bereichs der direkt unterhalb der aktuell bestrahlten Schicht liegenden Schicht, so wird die pro Zeiteinheit und Flächeneinheit am Auftreffpunkt des Strahls auf der aktuell bestrahlten Schicht auftreffende Strahlungsenergie größer gewählt, als in Schichtbereichen, in denen die Schicht auf nicht verfestigtem Rohmaterial der vorausgehenden Schicht liegt. Es kann insoweit für jeden zu verfestigenden Punkt des Formkörpers eine im Voraus getroffene Festlegung der Bestrahlungsbedingungen erfolgen und in betreffenden Datensätzen für die Prozesssteuerung berücksichtigt werden.

Aufgabe der vorliegenden Erfindung ist es, ein Verfahren mit den Merkmalen des Oberbegriffs des Anspruchs 1 mit geringem Aufwand dahingehend zu verbessern, dass der Umschmelzvorgang beim Bestrahlen des Pulvers mit einer gleichmäßigeren Temperaturverteilung auch bei komplizierten Formkörpergeometrien erfolgen kann und der betreffende Formkörper mit geringeren inneren mechanischen Spannungen und mit geringerem Verzug als bisher hergestellt werden kann.

Zur Lösung dieser Aufgabe wird ein Verfahren mit den Merkmalen des Anspruchs 1 vorgeschlagen. Dabei wird in den Bestrahlungsschritten d) der ortsselektive Energieeintrag pro Zeiteinheit an einem jeweiligen Bestrahlungsort auf der jeweiligen Schicht in Abhängigkeit von dem Wärmeableitvermögen eines definierten, unmittelbaren sich über wenigstens drei Schichten, insbesondere über wenigstens einhundert Schichten nach unten unterhalb des jeweiliigen Bestrahlungsortes (I - IV) erstreckenden, dreidimensionalen, Umgebungsbereichs des Bestrahlungsortes gewählt und durch Einstellung von Bestrahlungsparametern, wie Energiedichte der Strahlung am Bestrahlungsort oder/und Dauer der Bestrahlung des Bestrahlungsortes, automatisch entsprechend moduliert.

Das erfindungsgemäße Verfahren ermöglicht die vollständige Kontrolle aller wesentlichen Bauparameter, wie etwa die Laserleistung, die Laserabtastgeschwindigkeit usw. in jedem einzelnen Volumenelement des in Entstehung befindlichen Formkörpers während der Bauphase. Die Grundidee war dabei, die STL-Datendarstellung eines Formkörpers in zahlreiche kleine Volumenelemente (Voxel) zu partitionieren und die Schmelzbedingungen jedes dieser Voxel zu kontrollieren. Die Schmelzparameter werden dabei vorzugsweise vermittels einer theoretischen Voxel-Modellberechnung bestimmt. Die betrachteten Voxel haben in Abhängigkeit von ihrer jeweiligen Position unterschiedlich viele Nachbarn. So finden sich z.B. Voxel mit weniger Nachbarn an den Rändern des Formkörpers oder in überhängenden Abschnitten.

Bei der Herstellung von Formkörpern nach dem SLM-Prinzip werden die Formkörper üblicherweise in ihrer digitalen STL-Datenpräsentation in Schichten mit Schichtdicken aus einem Bereich von typisch 20 - 50 µm unterteilt, wobei auch andere Schichtdicken möglich sind. Entsprechend dieser Schichtenaufteilung wird dann der betreffende Formkörper in der SLM-Maschine Schicht für Schicht aus dem Werkstoffpulver hergestellt. Gemäß der vorliegenden Erfindung können Schicht für Schicht sog. Erhitzungsmuster berechnet werden, die Bereiche unterschiedlicher thermischer Eigenschaften definieren. Auf diese Bereiche können Geometriestrukturen, wie etwa Punkt- oder Vektorstrukturen abgebildet werden, die mit variabler Laserleistung, Laserscangeschwindigkeit oder dgl. bei dem Bauprozess durch Abscannen mit dem Laserstrahl umgesetzt werden können. Die Berechnung der Energieparameter erfolgt vorzugsweise mittels eines Prozessrechners, wobei ein theoretisches Modell als Grundlage für diese Berechnungen dient, welches als ein Maß für das Wärmeableitvermögens der Umgebung eines Voxels oder aktuellen Bestrahlungsortes in bzw. auf der aktuell zu bestrahlenden Schicht den Volumentanteil, bereits durch Verschmelzen von Werkstoffpulver verfestigten Materials innerhalb eines definierten, unmittelbaren sich über wenigstens drei Schichten, insbesondere über wenigstens einhundert Schichten nach unten unterhalb des jeweiliigen Bestrahlungsortes (I - IV) erstreckenden, dreidimensionalen, Umgebungsbereiches des Voxels bzw. Bestrahlungsortes vorsieht. Der restliche Volumenanteil besteht dann nomalerweise aus Werkstoffpulver.

Während des Bauprozesses des Formkörpers beeinflusst die Änderung der jeweiligen Wärmeleitungseigenschaften die lokale Energieaufnahme für das Umschmelzen des Pulvers in den jeweiligen Volumenelementen. Ein solches Volumenelement kann vorzugsweise durch die Schichtdicke und den minimal kleinsten Bereich, der am Bestrahlungsort durch die Laserbestrahlung umgeschmolzen werden kann, definiert werden. Ein solches Volumenelement (Voxel) kann typischerweise 100 µm x 100 µm, x Pulverschichtdicke betragen. Selbstverständlich sind auch andere Dimensionen der Volumenelemente denkbar. Insbesondere können bei den Umgebungsbereichs-Berechnungen auch größere Volumenelemente definiert werden, die sich z.B. jewels über mehrere Schichten erstrecken können.

Ein besonderer Vorteil der vorliegenden Erfindung ist es, die Engergiebetrachtungen hochaufgelöst ortsselektiv durchführen zu können, und dies ohne zusätzlichen messtechnischen Aufwand. Die Erfindung ermöglicht somit die spannungsarme Herstellung von Formkörpern auch komplizierterer Geometrien mit abwechselnd filigranen und ausgedehnteren Formkörperbereichen.

Die definierten, unmittelbaren, dreidimensionalen Umgebungsbereiche der Bestrahlungsorte wechseln von Bestrahlungsort zu Bestrahlungsort und erstrecken sich über mehrere Schichten, nämlich über wenigstens drei Schichten und besonders bevorzugt über mindestens 100 Schichten nach unten unterhalb des aktuellen Bestrahlungsortes. Diese Umgebungsbereiche können vorzugsweise gleiche Form und gleiches Volumen aufweisen, etwa Quaderform, Halbkugelform oder Pyramidenform.

Weiterbildungen des erfindungsgemäßen Verfahrens sind in den Unteransprüchen 2 - 9 angegeben, wobei insbesondere die Vorgehensweise gemäß Anspruch 5 eine sehr einfache Möglichkeit der Bestimmung des Wärmeableitvermögens darstellt. Unter Bestimmung des Wärmeableitvermögens wird die Bestimmung einer Ersatzgröße verstanden, die ein insbesondere zumindest näherungsweise proportionales Maß für das Wärmeableitvermögen darstellt. Es muss daher im Rahmen der Erfindung nicht das exakte Wärmeleitvermögen der Umgebung eines betreffenden Bestrahlungsortes bestimmt und ausgerechnet werden.

Im einfachsten Fall kann als Ersatzgröße die der in einem betreffenden definierten Umgebungsbereich liegenden, durch Pulverumschmelzen bereits verfestigten Volumenelemente (Voxel) des herzustellenden Formkörpers herangezogen werden, wie dies insbesondere in den Patentansprüchen 5 und 6 zum Ausdruck kommt. Weiterbildend kann diese Menge an bereits verfestigten Volumenelementen noch durch wenigstens einen weiteren Parameter gewichtet werden, etwa durch die Anzahl der unmittelbar an das dem Bestrahlungsort zugeordnete Volumenelement berührend heranreichenden Nachbarelemente.

Je kleiner die Ersatzgröße für das Wärmeableitvermögen ist, desto geringer wird der Energieeintrag pro Zeiteinheit am Bestrahlungsort gewählt. Damit wird erreicht, dass die beim Umschmelzen erzeugten Temperaturen an den Bestrahlungsorten nicht mehr so stark differieren, als dies bisher unter Ausführung konventioneller SLM-Verfahren der Fall war.

Wie schon erwähnt, handelt es sich bei den betrachteten Volumenelementen vorzugsweise um Würfel oder Quader mit einer der jeweiligen Schichtdicke beim schichtweisen Aufbau des Formkörpers entsprechenden Höhe, wobei diese Volumenelemente exakt in den Schichten einander benachbart angeordnet werden können. Alternativ können auch größere Volumenelemente und anders dimensionierte Umgebungsbereiche betrachtet werden.

Gemäß der vorliegenden Erfindung besteht somit die Möglichkeit für jedes einem Bestrahlungsort zugeordneten Volumenelement des herzustellenden Formkörpers einen Datensatz für Bestrahlungsparameter im Speicher des Prozessrechners zu hinterlegen und während des Bauprozesses abzurufen, um den Laser entsprechend zu steuern. Dabei können Toleranzbereiche für das Wärmeableitvermögen der definierten Umgebungsbereiche der Bestrahlungsorte definiert werden, so dass der Energieeintrag pro Zeiteinheit am jeweiligen Bestrahlungsort nicht variiert wird von Bestrahlungsort zu Bestrahlungsort, wenn die Änderung des Wärmeableitvermögens der Umgebungsbereiche innerhalb des Toleranzbereichs liegt.

Auch die Strahlablenkstrategie, gemäß welcher die jeweilige Pulverschicht mit dem Laserstrahl abgetastet wird, um das Pulver bereichsweise umzuschmelzen, kann das jeweilige Wärmeableitvermögen der definierten unmittelbaren Umgebungsbereiche der betrachteten Bestrahlungsorte berücksichtigten. In diesem Sinne kann die zeitliche Abfolge der Bestrahlungsorte bei der Bestrahlung einer jeweiligen Schicht unter Berücksichtigung des aus den Geometriebeschreibungsdaten bestimmten Maßes für das Wärmeableitvermögen der definierten, dreidimensionalen, unmittelbaren Umgebungsbereiche der Bestrahlungsorte gewählt werden. Dabei wird vorzugsweise so vorgegangen, dass die Bestrahlungszeit pro Schicht möglichst kurz ist und dennoch ungleichmäßiges Aufheizen unterschiedlich filigraner Bereiche des entstehenden Formkörpers vermieden wird. Dabei wird der Laserstrahl zweckmäßigerweise so abgelenkt, dass sein Auftreffpunkt auf der Schicht pro Zeiteinheit im Bereich feinerer Formkörperstrukturen weniger lang verweilt als im Bereich größerer zusammenhängender Bereiche mit guter Wärmeableitung nach unten. Solche geometrischen Vorgaben bei der Strahlablenkung des Laserstrahls können ebenfalls in den Datensätzen in Zuordnung zu den Bestrahlungsparametern hinterlegt sein, um die Prozessführung zu optimieren.

Die Vorrichtung nach der Erfindung ist zur Durchführung des Verfahrens bestimmt und eingerichtet, wobei die Steuereinrichtung zur Steuerung der Bestrahlungseinrichtung programmiert ist, so dass in den Bestrahlungsschritten d) der ortsselektive Energieeintrag pro Zeiteinheit an einem jeweiligen Bestrahlungsort auf der jeweiligen Schicht in Abhängigkeit von dem Wärmeleitvermögen eines definierten unmittelbaren Umgebungsbereiches des Bestrahlungsortes gewählt und durch Einstellung von Bestrahlungsparametern, wie Energiedichte der Strahlung am Bestrahlungsort oder/und Dauer der Bestrahlung des Bestrahlungsortes, automatisch entsprechend moduliert wird.

Als Alternative zum herkömmlichen Laser käme auch eine Strahlungsquelle in Frage, die ein Strahlungsquellenarray oder ein Strahlumlenkarray aufweist, welches ein paralleles Bestrahlungsmuster auf der zu bestrahlenden Pulverschicht erzeugt. In diesem Bestrahlungsmuster können die einzelnen Arraypixel dann entsprechend dem Grundgedanken der vorliegenden Erfindung unterschiedlich starken Energieeintrag in das Pulvermaterial erzeugen, je nach Wärmeableitvermögen des Umgebungsbereichs des betrachteten Arraypixels. Eine solche Array-Strahlungsquelle kann z.B. als "Vorwärmungsquelle" zusätzlich zu einem Laserstrahl benutzt werden.

Die Erfindung ist ganz allgemein auch auf das selektive Lasersintern (SLS) anwendbar, bei dem das Werkstoffpulver nicht vollständig durchgeschmolzen, sondern nur angeschmolzen wird. Der Schutzbereich erstreckt sich insoweit auch auf entsprechende SLS-Verfahren.

Ein Ausführungsbeispiel der Erfindung wird unter Bezugnahme auf die beigefügten Zeichnungen näher erläutert.
- Fig. 1: zeigt eine Prinzipskizze einer Vorrichtung nach der Erfindung.
- Fig. 2: zeigt eine Erläuterungsskizze zur Darstellung von Schritten der Bestimmung einer Ersatzgröße für das Wärmeableitvermögen von Umgebungsbereichen von Bestrahlungsorten in einem Beispiel.
- Fig. 3a: zeigt den in Fig. 2 mit A bezeichneten Ausschnitt in vergrößerter Darstellung und mit Einzeichnung von theoretischen Volumenelementen (nicht maßstäblich).
- Fig. 3b: zeigt eine Draufsicht auf den in Fig. 3a dargestellten Umgebungsbereich.
- Fig. 4a: zeigt den in Fig. 2 mit B gekennzeichneten Bereich in vergrößerter Darstellung entsprechend Fig. 3a.
- Fig. 4b: zeigt den Umgebungsbereich aus Fig. 4a in Draufsicht.
- Fig. 5a: zeigt den in Fig. 2 mit C gekennzeichneten Bereich in einer Darstellung entsprechend Fig. 3a.
- Fig. 5b: zeigt den Umgebungsbereich aus Fig. 5a in Draufsicht.
- Fig. 6a: zeigt den in Fig. 2 mit D gekennzeichneten Bereich in vergrößerter Darstellung gemäß Fig. 3a.
- Fig. 6b: zeigt den Umgebungsbereich aus Fig. 6a in Draufsicht.
- Fig. 7: zeigt qualitativ unterschiedliche Bereiche der aktuell zu bestrahlenden Schicht aus Fig. 2, wobei diese Bereiche durch unterschiedliches Wärmeableitvermögen ihrer Umgebungen gekennzeichnet sind.

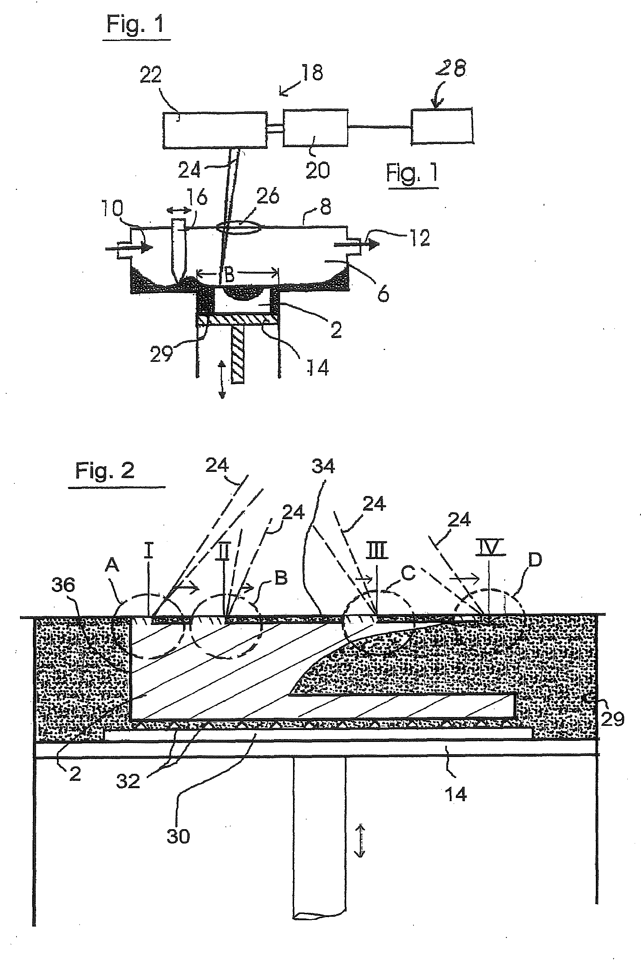

Die Erläuterungsskizze gemäß Fig. 1 zeigt eine Momentaufnahme bei der Herstellung eines Formkörpers 2 durch schichtweises Aufbauen aus einem Pulver 4, z.B. Stahlpulver, Titanpulver, Goldpulver usw. oder ggf. auch ein Mischpulver, mit einer Körnung von z. B. 10 µm - 100 µm. Der Aufbau des Formkörpers 2 erfolgt in einem Prozessraum 6, welcher von dem Prozessraumgehäuse 8 begrenzt ist. In dem Prozessraum 6 herrscht Schutzgasatmosphäre, vorzugsweise ArgonAtmosphäre, wobei der Pfeil 10 in Fig. 1 die Schutzgaszuleitung - und der Pfeil 12 die Schutzgasableitung andeutet. Das schichtweise Aufbauen des Gegenstandes 2 erfolgt auf einer Trägerplattform 14, welche mittels einer Vertikalantriebseinheit vertikal bewegbar und in verschiedenen Vertikaleinstellungen positionierbar ist. Ein Glättungsschieber 16 dient zur Präparierung und Einebnung einer neuen Pulverschicht auf der jeweils zuletzt bestrahlten Pulverschicht, wobei der Glättungsschieber in einem vertikalen Abstand entsprechend der gewünschten Pulverschichtdicke zu der zuletzt bestrahlten Schicht horizontal über die Trägerplattform 14 hinweg bewegt wird. Nach der Präparierung einer solchen Pulverschicht kommt dann die Bestrahlungseinrichtung 18 aus Laser 20 und Strahlablenkeinheit 22 zum Einsatz, um das Pulver an den vorbestimmten Stellen entsprechend dem der Pulverschicht zugeordneten Querschnitt des herzustellenden Formkörpers durch Bestrahlen umzuschmelzen. Im Beispielsfall wird der Laserstrahl 24 durch eine f-Theta-Linse 26 hindurch in den Prozessraum 6 eingebracht, wobei die Linse 26 auch als Fenster des Gehäuses 8 dient.

Nach Fertigstellung des aktuellen Bestrahlungsvorgangs wird die Trägerplattform 14 um das Maß der gewünschten Pulverschichtdicke abgesenkt, woraufhin dann der Glättungsschieber 16 eine neue Pulvermenge über der Bauplattform 14 verteilt, um die nächste zu bestrahlende Schicht herzustellen. Die vorstehend geschilderten Vorgänge des Bestrahlens und Schichtenpräparierens werden abwechselnd weiterhin durchgeführt, bis der Gegenstand 2 fertiggestellt ist. Eine Steuereinrichtung 28 mit einem Prozessrechner dient zur Steuerung des Bauprozesses, wobei sie die Abtastbewegung des Laserstrahls 24 durch Steuerung der Strahlablenkeinheit 22 nach Maßgabe von Geometriebeschreibungsdaten des Formkörpers 2 steuert.

Steuerbar mittels der Steuereinrichtung 28 sind auch Bestrahlungsparameter, wie die Leistung des Laserstrahls 24, die Fokussierung des Laserstrahls 24 und die Abtastgeschwindigkeit des Laserstrahls 24. Durch Modulation wenigstens eines dieser Bestrahlungsparameter, vorzugsweise mehrerer Bestrahlungsparameter, kann der Energieeintrag des Laserstrahls pro Zeiteinheit in die jeweils bestrahlte Pulverschicht am Strahlauftreffort, d. h. dem jeweiligen Bestrahlungsort, entsprechend einer gewünschten Bestrahlungsstrategie geändert werden. Die jeweilige Energiedichte des Laserstrahls 24 am Strahlauftreffpunkt kann somit in Abhängigkeit vom jeweiligen Bestrahlungsort variiert werden. Gemäß einer Ausführungsform der vorliegenden Erfindung erfolgt eine solche Modulation der Energiedichte des Laserstrahls am Bestrahlungsort auf einer jeweiligen Schicht in Abhängigkeit von dem Ableitvermögen eines definierten unmittelbaren Umgebungsbereichs des Bestrahlungsortes. Je kleiner das Wärmeleitvermögen in der Umgebung eines Bestrahlungsortes ist, desto geringer wird der ortsselektive Energieeintrag pro Zeiteinheit am Bestrahlungsort gewählt, so dass ein möglichst gleichmäßiger Umschmelzprozess bei einer möglichst optimalen Umschmelztemperatur stattfinden kann. An Bestrahlungsorten mit einem sehr guten Wärmeableitvermögen der Umgebung erfolgt normalerweise ein größerer Energieeintrag pro Zeiteinheit, um den Umschmelzvorgang in der gewünschten Weise dort ablaufen zu lassen. Das Wärmeableitvermögen, also die Wärmeleitfähigkeit des Pulvers ist üblicherweise erheblich geringer als die Wärmeleitfähigkeit bereits durch Umschmelzen verfestigten Materials des entstehenden Formkörpers 2. Ist der aktuelle Bestrahlungsort überwiegend von dem Werkstoffpulver umgeben, so kann es bei Bestrahlung mit zu hoher Energiedichte zu einem Wärmestau am Bestrahlungsort und zu einer Temperaturerhöhung weit über den Schmelzpunkt des Pulvers kommen. Dabei können unerwünschte Verdampfungseffekte stattfinden und Schmelzspritzer ausgelöst werden. In Bereichen, in denen ein jeweiliger Bestrahlungsort weit überwiegend von bereits verfestigtem Material des entstehenden Formkörpers umgeben ist, würde die Bestrahlung mit der gleichen Energiedichte ggf. gerade ausreichen, um das Pulver am Bestrahlungsort umzuschmelzen.

Gemäß der vorliegenden Erfindung wird der Umbauprozess mit der Steuereinrichtung 28 so kontrolliert, dass der ortsselektive Energieeintrag pro Zeiteinheit an einem jeweiligen Bestrahlungsort auf einer betreffenden Schicht in Abhängigkeit von dem Wärmeableitvermögen eines definierten unmittelbaren Umgebungsbereichs des Bestrahlungsortes gewählt und durch Einstellung betreffender Bestrahlungsparameter mittels der Steuereinrichtung 28 gesteuert wird.

Anhand der Erläuterungsskizzen gemäß den Fig. 2 - 6b wird im Folgenden die grundsätzliche Vorgehensweise der Ermittlung des Wärmeableitvermögens eines jeweiligen definierten unmittelbaren Umgebungsbereichs an verschiedenen Bestrahlungsorten auf einer aktuell bestrahlten Schicht erläutert.

Fig. 2 zeigt schematisch in einer Schnittansicht einen Bauzylinder 29 mit einer darin vertikal absenkbaren Bauplattform 14, deren jeweilige Positionierung mittels einer Steuereinrichtung (vgl. 28 in Fig. 1) gesteuert wird. Auf der Bauplattform 14 befindet sich eine Substratplatte 30, auf welcher der in Fig. 2 bereits teilweise aufgebaute Formkörper 2 unter Zwischenschaltung einer ebenfalls in dem aktuellen Bauprozess nach dem SLM-Verfahren hergestellten Stützstruktur 32 schichtweise aufgebaut wird.

In der Momentaufnahme gemäß Fig. 2 findet die Bestrahlung der zuvor präparierten obersten Pulverschicht 34 mittels des Laserstrahls 24 statt. Zur weiteren Erläuterung werden vier willkürlich herausgegriffene Bestrahlungsorte I, II, III und IV auf der Schicht 34 betrachtet. Der Einfachheit halber sei ferner angenommen, dass diese vier Bestrahlungsorte auf einer geradlinigen Laserspur in der Zeichnungsebene liegen, wobei der Laserstrahl 24 die Schicht 34 in Fig. 2 aktuell von links nach rechts abtastet und dabei u. a. auch über die Bestrahlungsorte I - IV fährt. Der Bestrahlungsort I liegt nahe an dem seitlichen Rand 36 des bereits hergestellten Teils des Formkörpers 2.

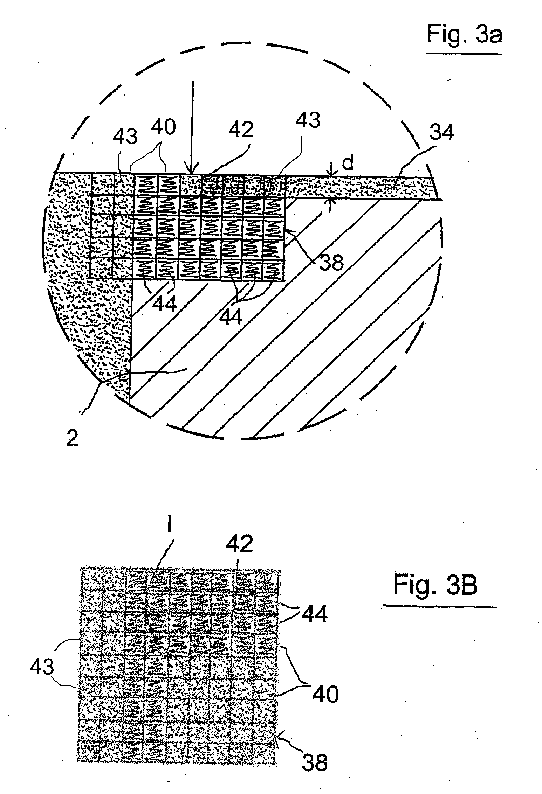

Fig. 3a zeigt den mit A in Fig. 2 gekennzeichneten Bereich in einer vergrößerten Ansicht, wobei in Fig. 3a zusätzlich ein definierter Umgebungsbereich 38 des aktuellen Bestrahlungsortes I als Gitter eingezeichnet ist. Dieser Umgebungsbereich 38 liegt unterhalb des Bestrahlungsortes I, also unterhalb der Oberseite der aktuell bestrahlten Schicht 36. Im Beispielsfall ist der Umgebungsbereich 38 ein Halbwürfel, der - ebenfalls nur beispielhaft - in 9x9x5 Volumenelemente 40 unterteilt ist. Das Würfelzentrum ist durch das Volumenelement 42 bestimmt, welches an dem Bestrahlungsort I liegt.

Die mit 44 gekennzeichneten und mit Schlangenlinien markierten Volumenelemente sind bereits verfestigt und bilden einen entsprechenden Bereich des Formkörpers 2. Die mit Pünktchen unterlegten Volumenelemente 43 enthalten Pulver und stellen Bereiche mit geringerer Wärmeableitfähigkeit als die Bereiche mit bereits verfestigtem Material dar.

Als Maß für das Wärmeableitvermögen des Umgebungsbereichs 38 des aktuellen Bestrahlungsortes I wird die Menge, d. h. die Anzahl der in dem definierten Umgebungsbereich 38 liegenden und bereits verfestigten Volumenelemente 44 ermittelt. Fig. 3b zeigt hierzu den Umgebungsbereich 38 in der Draufsicht auf die Oberseite der Schicht 34. Von den insgesamt 405 Volumenelementen in dem definierten Umgebungsbereich 38 sind ca. 290 Volumenelemente bereits verfestigt und bilden somit einen relativ großen zusammenhängenden Subbereich mit besserer Wärmeableitfähigkeit.

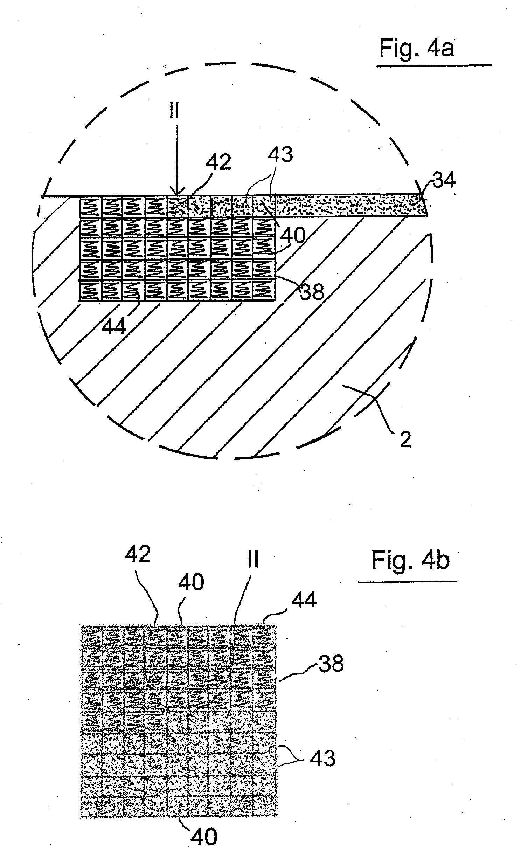

In den Fig. 4a und 4b ist der definierte Umgebungsbereich 38 für den Bestrahlungsort II in Seitenansicht und in Draufsicht dargestellt. Die Zahl an bereits verfestigten Volumenelementen 44 in dem Umgebungsbereich 38 des Bestrahlungsortes II beträgt ca. 364 und ist somit größer als in der Situation gemäß Fig. 3a - 3b. Der Umgebung des Bestrahlungsortes II wird somit ein besseres Wärmeableitvermögen zugeordnet als der Umgebung des Bestrahlungsortes I.

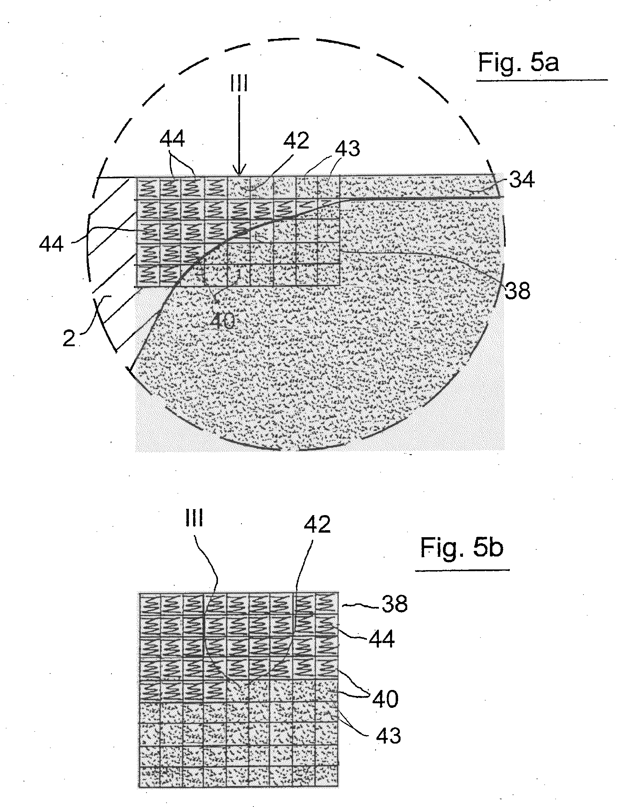

In den Fig. 5a und 5b ist der definierte Umgebungsbereich des Bestrahlungsortes III dargestellt. Die Anzahl an bereits verfestigten Volumenelementen beträgt ca. 210, so dass der Umgebung des Bestrahlungsortes III ein noch geringeres Wärmeableitvermögen als dem Bestrahlungsort I zugeordnet wird.

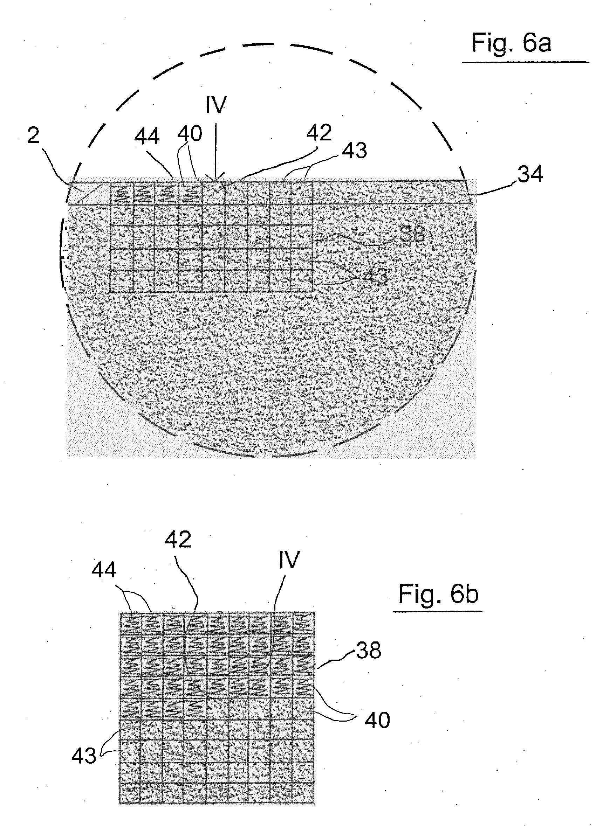

Noch geringer ist das Wärmeableitvermögen der Umgebung des Bestrahlungsortes IV. In den Fig. 6a und 6b ist der definierte Umgebungsbereich 38 des Bestrahlungsortes IV dargestellt. Es liegen nur ca. 40 verfestigte Volumenelemente in dem Umgebungsbereich 38 vor, wobei diese 40 Volumenelemente allesamt in der aktuell bestrahlten Schicht liegen. Der Bestrahlungsort IV hat somit die Besonderheit, dass dort die aktuell bestrahlte Schicht 38 nur auf Pulver darunterliegender Pulverschichten liegt.

Im Beispielsfall wurde als definierter unmittelbarer Umgebungsbereich eines Bestrahlungsortes ein Halbwürfel gewählt. In anderen Ausführungsbeispielen der Erfindung kann dieser Umgebungsbereich z. B. eine Halbkugel sein, in dessen Kugelzentrum das Volumenelement mit dem aktuellen Bestrahlungsort liegt. Auch weitere Formen des definierten unmittelbaren Umgebungsbereichs sind möglich.

In dem gezeigten Beispielsfall sind die Volumenelemente Würfel. In anderen Ausführungsbeispielen können solche Volumenelemente Quader oder Kugeln oder dgl. sein. Vorzugsweise liegen die Volumenelemente 40 exakt in den Aufbauschichten, wobei die Volumenelementhöhe der entsprechenden Schichtdicke entspricht.

Im Beispielsfall mit würfelförmigen Volumenelementen 40 entspricht somit die Kantenlänge der Volumenelemente 40 im Wesentlichen der jeweiligen Pulverschichtdicke d.

Bei der Bestimmung des Wärmeableitvermögens eines betreffenden Umgebungsbereichs 38 kann die Menge der bereits verfestigten Volumenelemente 44 noch mit anderen Größen gewichtet werden, etwa wie groß der Flächenanschluss bereits verfestigter Volumenelemente an das dem jeweiligen Bestrahlungsort zugeordnete Volumenelement ist.

Gemäß einer bevorzugten Variante des erfindungsgemäßen Verfahrens wird der komplette Formkörper datenmäßig in Volumenelemente (Voxel) unterteilt, die mit den Volumenelementen 40 (soweit diese in dem Formkörper liegen) vorzugsweise deckungsgleich sind, und jedem dieser Volumenelemente des Formkörpers wird ein jeweiliger Bestrahlungsort zugeordnet. Jedem so festgelegten Bestrahlungsort wird ein Bestrahlungsparametersatz zugeordnet, der von dem ermittelten Maß des Wärmeableitvermögens des definierten Umgebungsbereichs des Bestrahlungsorts in der oben angesprochenen Weise abhängt. Die Bestrahlungsparametersätze werden vorzugsweise in Zuordnung zu den Bestrahlungsorten gespeichert und von der Steuereinrichtung bei der Steuerung des Bestrahlungsvorganges aufgerufen und berücksichtigt. Dabei kann auch die zeitliche Abfolge der Bestrahlungsorte unter Berücksichtigung der erläuterten Wärmeableiteigenschaften optimiert gewählt werden.

Alternativ zur Festlegung einer solchen Datenzuordnungsstruktur kann das jeweilige Maß des Wärmeableitvermögens eines Umgebungsbereichs auch in Echtzeit während des Bestrahlungsvorganges von der Steuereinrichtung 28 berechnet und dem jeweiligen Bestrahlungsort zugeordnet werden. Es sei an dieser Stelle noch einmal darauf hingewiesen, dass nicht das Wärmeableitvermögen im Sinne der Wärmeleitfähigkeit physikalisch berechnet werden muss, sondern dass als Maß für das Wärmeableitvermögen eine Ersatzgröße, im einfachsten Fall die oben erläuterte Anzahl der verfestigten Volumenelemente in dem jeweiligen Umgebungsbereich verwendet werden kann.

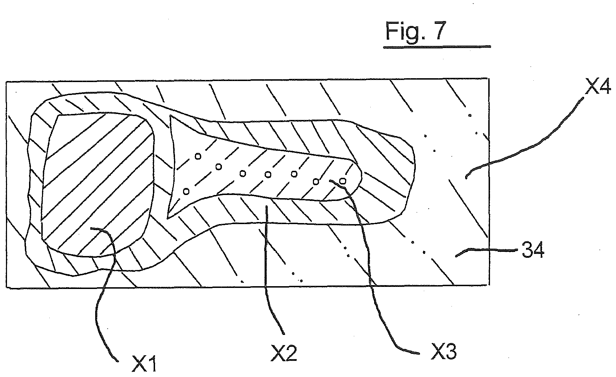

Fig. 7 zeigt in einem qualitativen Beispiel in einer Draufsicht auf die aktuell zu bestrahlende Schicht 34 gemäß Fig. 2 Bereiche X1, X2, X3 und X4, die nach dem Wärmeableitvermögen der Umgebung der darin liegenden Bestrahlungsorte unterschieden sind. In dem Bereich X1 ist das Wärmeableitvermögen der Umgebung am größten, so dass in diesem Bereich X1 der Energieeintrag pro Zeiteinheit durch den Laserstrahl am Bestrahlungsort relativ groß zu wählen ist. Die Bereiche X2, X3 und X4 sind durch in der Reihenfolge der Aufzählung abnehmendes Wärmeableitvermögen der Umgebung gekennzeichnet, so dass in entsprechender Weise auch der Energieeintrag durch Strahlung pro Zeiteinheit am Strahlungsort entsprechend kleiner gewählt wird.

Die einzelnen Bereiche X1 - X4 sind jeweiligen Toleranzen des Wärmeableitvermögens zugeordnet, wenngleich nach der vorliegenden Erfindung jedem einzelnen Voxel ein eigenes Maß für das Wärmeableitvermögen seines definierten unmittelbaren Umgebungsbereichs zugeordnet werden könnte.

Vorzugsweise wird in einem jeweiligen Bereich X1 - X4 der gewählte Bestrahlungsparametersatz beibehalten. So wird z. B. in dem Bereich X1 die Laserleistung und die Ausdehnung des Strahlauftreffpunktes nicht verändert und der Strahl mit im Wesentlichen konstantem Geschwindigkeitsbetrag über den Bereich X1 geführt. Entsprechendes gilt für die jeweiligen Bestrahlungsparamtersätze in den Bereichen X2, X3 und X4.

Weiterhin kann die Abtastspur des Laserstrahls auf der Schicht jeweils nach weiteren Optimierungsgesichtspunkten gewählt werden, etwa um den Bauprozess zeitlich zu beschleunigen.

So besteht auch die Möglichkeit, bestimmte Geometrietypen der Abtastspuren bzw. Abtastspurabschnitte unterschiedlichen Bereichen X1, X2, X3 und X4 in Fig. 7 zuzuordnen, wobei diese Geometrietypen (Abtastvektoren) ebenfalls in einer von der Steuereinrichtung 28 abrufbaren Weise in Zuordnung zu unterschiedlichen Bereichen X1, X2, X3, X4 in einem Speicher gespeichert sind. Diese Vorgehensweise ist selbstverständlich nicht auf das Beispiel der Fig. 2 - 7 beschränkt, sondern verallgemeinerbar.

Das erfindungsgemäße Verfahren und die erfindungsgemäße Vorrichtung zur Durchführung des Verfahrens erlauben somit ein gleichmäßiges Umschmelzen des Pulvers, so dass Verdampfungseffekte, Schmelzspritzeffekte und dgl. weitestgehend unterdrückt werden und der hergestellte Formkörper ohne kritische mechanische Spannungen und formgetreu entsprechend den Geometriebeschreibungsdaten aufgebaut wird. Auch eine Stützstruktur 32, wie in Fig. 2 gezeigt, kann in den Bauprozess nach der Erfindung und in die Wärmeableitbetrachtungen einbezogen werden.

## Patentansprüche

1. Verfahren zur Herstellung eines Formkörpers durch schichtweises Aufbauen aus Werkstoffpulver, umfassend die Schritte:
a) Präparieren einer Schicht (34) aus Werkstoffpulver,
b) Erhitzen der Schicht (34) durch ortsselektives Bestrahlen der Schicht (34) entsprechend einem der Schicht (34) zugeordneten Querschnittsmuster des Formkörpers (2) nach Maßgabe von Geometriebeschreibungsdaten des Formkörpers (2) mit kontrollierter Strahlung, so dass das Werkstoffpulver zu zusammenhängenden Bereichen entsprechend dem Querschnittsmuster des Formkörpers (2) durch Verschmelzen verfestigt wird,
c) Präparieren einer nächsten Schicht aus Werkstoffpulver (34) auf der zuletzt bestrahlten Schicht und
d) Erhitzen der zuletzt präparierten Schicht (34) durch ortsselektives Bestrahlen der Schicht (34) entsprechend einem dieser Schicht zugeordneten Querschnittsmuster des Formkörpers mit kontrollierter Strahlung, so dass das Werkstoffpulver zu zusammenhängenden Bereichen entsprechend diesem Querschnittsmuster des Formkörpers (2) durch Verschmelzen verfestigt wird, und
e) mehrfaches Wiederholen der Schritte c) und d) zumindest bis zur Fertigstellung des Aufbaus des Formkörpers (2), wobei der durch das Bestrahlen in den Bestrahlungsschritten d) erfolgende ortsselektive Energieeintrag pro Zeiteinheit durch Strahlung abhängig vom jeweiligen Bestrahlungsort auf der Pulverschicht (34) variierbar ist,
**dadurch gekennzeichnet,**
**dass** in den Bestrahlungsschritten d) der ortsselektive Energieeintrag pro Zeiteinheit an einem jeweiligen Bestrahlungsort (I - IV) auf der jeweiligen Schicht (34) in Abhängigkeit von dem Wärmeableitvermögen eines jeweiligen definierten, unmittelbaren sich über wenigstens drei Schichten, insbesondere über wenigstens einhundert Schichten nach unten unterhalb des jeweiligen Bestrahlungsortes (I - IV) erstreckenden, dreidimensionalen Umgebungsbereichs (38) des Bestrahlungsortes (I - IV) gewählt und durch Einstellung von Bestrahlungsparametern, wie Energiedichte der Strahlung am Bestrahlungsort oder/und Dauer der Bestrahlung des Bestrahlungsortes, automatisch entsprechend moduliert wird, wobei als Maß für das Wärmeableitvermögen des definierten, unmittelbaren sich über wenigstens drei Schichten, insbesondere über wenigstens einhundert Schichten nach unten unterhalb des jeweiligen Bestrahlungsortes (I - IV) erstreckenden, dreidimensionalen Umgebungsbereiches des jeweiligen Bestrahlungsortes der Volumenanteil bereits durch Verschmelzen von Werkstoffpulver verfestigten Materials innerhalb dieses Umgebungsbereiches aus Geometriebeschreibungsdaten des Formkörpers bestimmt wird, und wobei der ortsselektive Energieeintrag pro Zeiteinheit am Bestrahlungsort im Rahmen etwaiger Toleranzen umso größer gewählt wird, je größer das Wärmeableitvermögen seines Umgebungsbereiches (38) ist.

2. Verfahren nach Anspruch 1, **dadurch gekennzeichnet, dass** das ortsselektive Bestrahlen durch gesteuertes Abtasten der jeweiligen Pulverschicht (34) mit einem gebündelten Laserstrahl (24) realisiert wird, wobei in Abhängigkeit vom Wärmeableitvermögen der definierten unmittelbaren Umgebung des jeweiligen momentanen Bestrahlungsortes (I - IV) die Strahlungsleistung oder/und die Ausdehnung des Auftreffpunktes des Laserstrahls auf der Pulverschicht (34) oder/und die Strahlabtastgeschwindigkeit an dem Bestrahlungsort (I - IV) eingestellt wird.

3. Verfahren nach Anspruch 1 oder 2, **dadurch gekennzeichnet, dass** das aus den Geometriebeschreibungsdaten des Formkörpers bestimmte Maß für das Wärmeableitvermögen des definierten, unmittelbaren, dreidimensionalen Umgebungsbereiches des jeweiligen Bestrahlungsortes zur automatischen Steuerung der zu modulierenden Bestrahlungsparameter mittels einer den Bestrahlungsvorgang steuernden Steuereinrichtung (28) verwendet wird.

4. Verfahren nach Anspruch 3, **dadurch gekennzeichnet, dass** die ermittelten Werte des Maßes für das Wärmeableitungsvermögen oder daraus abgeleitete Werte in Zuordnung zu jeweiligen Geometriebeschreibungsdaten der betreffenden Bestrahlungsorte (I - IV) gespeichert werden, so dass sie von der Steuereinrichtung (28) auslesbar und verarbeitbar sind, um die Bestrahlungsvorgänge während des Bauprozesses zu steuern.

5. Verfahren nach einem der Ansprüche 1 - 4, **dadurch gekennzeichnet, dass** zur Bestimmung des Maßes für das jeweilige Wärmeableitvermögen der unmittelbaren Umgebungsbereiche der betrachteten Bestrahlungsorte (I - IV) ein theoretisches Modell des Formkörpers (2) oder eines Bereiches davon datenmäßig in einzelne Schichten , vorzugsweise entsprechend den einzelnen Aufbauschichten (34), unterteilt wird und diese Schichten (34) zudem in eine Vielzahl von Volumenelementen (40) mit einer der Schichtdicke (d) entsprechenden Volumenelementhöhe unterteilt werden, wobei die Volumenelemente (40) den Bestrahlungsorten zuzuordnen sind und stellvertretend für diese betrachtet werden,
dass für jedes stellvertretend für einen betreffenden Bestrahlungsort betrachtete Volumenelement (40) ein jeweiliger sich über wenigstens drei Schichten, insbesondere über wenigstens einhundert Schichten nach unten unterhalb des jeweiligen Bestrahlungsortes (I - IV) erstreckender dreidimensionaler, unmittelbarer Umgebungsbereich (38) definiert wird und dass als Maß für die Bestimmung des Wärmeableitvermögens des definierten unmittelbaren Umgebungsbereichs (38) eines betreffenden Bestrahlungsortes (I - IV) die Menge der in dem Umgebungsbereich (38) jeweils liegenden Volumenelemente des bei Bestrahlung des betreffenden Bestrahlungsortes (I - IV) bereits durch Umschmelzen verfestigten Teils des Formkörpers berücksichtigt wird.

6. Verfahren nach Anspruch 5, **dadurch gekennzeichnet, dass** in dem jeweiligen definierten, dreidimensionalen, unmittelbaren Umgebungsbereich (38) eines betreffenden Bestrahlungsortes jeweils die Menge der Volumenelemente (40) des bereits durch Umschmelzen verfestigten Teils des Formkörpers (2) berücksichtigt wird, die in Schichten unterhalb der Schicht (34) des betrachteten Bestrahlungsortes liegen.

7. Verfahren nach Anspruch 6, **dadurch gekennzeichnet, dass** auch die Menge der in dem Umgebungsbereich (38) liegenden Volumenelemente des bereits durch Umschmelzen verfestigten Teils des Formkörpers berücksichtigt wird, die in der Schicht des aktuell betrachteten Bestrahlungsortes (I - IV) liegen.

8. Verfahren nach einem der vorhergehenden Ansprüche, **dadurch gekennzeichnet, dass** Bestrahlungsparametersätze mit Bestrahlungsparametern, die von dem jeweiligen Wärmeableitvermögen der definierten unmittelbaren Umgebungsbereiche der betrachteten Bestrahlungsorte abhängen in Zuordnung zu Geometriebeschreibungsdaten dieser Bestrahlungsorte gespeichert werden, so dass sie von der Steuereinrichtung (28) auslesbar und verarbeitbar sind, um die Bestrahlungsvorgänge zu steuern.

9. Verfahren nach einem der vorher gehenden Ansprüche, **dadurch gekennzeichnet, dass** die zeitliche Abfolge der Bestrahlungsorte bei der Bestrahlung einer jeweiligen Schicht (34) unter Berücksichtigung des aus den Geometriebeschreibungsdaten bestimmten Maßes für das Wärmeableitvermögen der definierten, dreidimensionalen, unmittelbaren Umgebungsbereiche der Bestrahlungsorte gewählt wird.

10. Vorrichtung, die zur Durchführung des Verfahrens nach einem der vorhergehenden Ansprüche eingerichtet ist, umfassend ein Prozessraumgehäuse (8) mit einer Trägerplattform (14) zur Abstützung des herzustellenden Formkörpers, eine Schichtenpräparierungseinrichtung (16) zur Präparierung jeweiliger Pulverschichten auf der Trägerplattform (14), eine Bestrahlungseinrichtung (18) zur Bestrahlung der jeweils zuletzt präparierten Pulverschicht auf der Trägerplattform (14) nach Maßgabe von Geometriebeschreibungsdaten des herzustellenden Formkörpers und eine Steuereinrichtung (28) zur Steuerung der Bestrahlungseinrichtung (18), **dadurch gekennzeichnet,**
**dass** die Steuereinrichtung dazu eingerichtet und programmiert ist, die Bestrahlungseinrichtung so zu steuern, dass der ortsselektive Energieeintrag pro Zeiteinheit an einem jeweiligen Bestrahlungsort (I - IV) auf der jeweiligen Schicht (34) in Abhängigkeit von dem auf der Basis von Geometriebeschreibungsdaten des herzustellenden Formkörpers bestimmten Wärmeableitvermögen eines jeweiligen definierten, unmittelbaren sich über wenigstens drei Schichten, insbesondere über wenigstens einhundert Schichten nach unten unterhalb des jeweiligen Bestrahlungsortes (I - IV) erstreckenden dreidimensionalen, Umgebungsbereiches (38) des Bestrahlungsortes (I - IV) durch entsprechende Einstellung von Bestrahlungsparametern, wie Energiedichte der Strahlung am Bestrahlungsort, oder/und Dauer der Bestrahlung des Bestrahlungsortes, erfolgt.

11. Vorrichtung nach Anspruch 10, **dadurch gekennzeichnet, dass** die Bestrahlungseinrichtung (18) einen Laser (20) und eine Strahlablenkeinheit (22) zur gesteuerten Ablenkung des von dem Laser emitierten Laserstrahls (24) aufweist.

## Claims

1. Method for producing a moulded body by building up layers of powder material, comprising the steps of:
a) preparing a layer (34) of powder material,
b) heating the layer (34) by irradiating the layer (34) using controlled radiation in a locationally selective manner, corresponding to a cross-sectional pattern of the moulded body (2) that is assigned to the layer (34), on the basis of geometric description data of the moulded body (2), such that the powder material is solidified by melting to form contiguous regions corresponding to the cross-sectional pattern of the moulded body (2),
c) preparing a next layer of powder material (34) on the most recently irradiated layer and
d) heating the most recently prepared layer (34) by irradiating the layer (34) using controlled radiation in a locationally selective manner, corresponding to a cross-sectional pattern of the moulded body that is assigned to said layer, such that the powder material is solidified by melting to form contiguous regions corresponding to said cross-sectional pattern of the moulded body (2), and
e) repeating steps c) and d) multiple times, at least until the structure of the moulded body (2) is completed, the locationally selective energy input per unit of time that occurs by means of the irradiation in the irradiation steps d) being variable by means of radiation depending on the relevant irradiation location on the powder layer (34), **characterised in that** in the irradiation steps d) the locationally selective energy input per unit of time at a relevant irradiation location (I - IV) on the relevant layer (34) is selected depending on the thermal conductivity of a relevant defined, immediate, three-dimensional surrounding region (38) of the irradiation location (I - IV) that extends downwards over at least three layers, in particular over at least one hundred layers, below the relevant irradiation location (I - IV), and said energy input is correspondingly automatically modulated by adjusting irradiation parameters, such as the energy density of the radiation at the irradiation location and/or the duration of the irradiation of the irradiation location, the volume fraction of material within said surrounding region that is already solidified by melting material powder being determined from geometric description data of the moulded body as a measure of the thermal conductivity of the defined, immediate, three-dimensional surrounding region of the relevant irradiation location that extends downwards over at least three layers, in particular over at least one hundred layers, below the relevant irradiation location (I - IV), and the locationally selective energy input per unit of time at the irradiation location being selected to be greater within possible tolerances, the greater the thermal conductivity of the surrounding region (38) thereof.

2. Method according to claim 1, **characterised in that** the locationally selective irradiation is achieved by controlled scanning of the relevant powder layer (34) using a bundled laser beam (24), the radiation power and/or the extent of the impact point of the laser beam on the powder layer (34) and/or the beam scanning speed at the irradiation location (I - IV) being adjusted depending on the thermal conductivity of the defined immediate environment of the relevant current irradiation location (I - IV).

3. Method according to either claim 1 or claim 2, **characterised in that** the measure determined from the geometric description data of the moulded body for the thermal conductivity of the defined, immediate, three-dimensional surrounding region of the relevant irradiation location is used to automatically control the irradiation parameters which are to be modulated, by means of a control apparatus (28) which controls the irradiation process.

4. Method according to claim 3, **characterised in that** the determined values of the measure for the thermal conductivity or values derived therefrom are stored in association with relevant geometric description data of the relevant irradiation locations (I - IV), such that said values can be read out and processed by the control apparatus (28) in order to control the irradiation processes during the construction process.

5. Method according to any of claims 1 to 4, **characterised in that**, in order to determine the measure for the relevant thermal conductivity of the immediate surrounding regions of the considered irradiation locations (I - IV), a theoretical model of the moulded body (2) or of a region thereof is divided into individual layers in terms of data, preferably corresponding to the individual structural layers (34), and said layers (34) are additionally divided into a plurality of volume elements (40) having a volume element height which corresponds to the layer thickness (d), the volume elements (40) being intended to be assigned to the irradiation locations and being considered as representative of said locations, **in that** for each volume element (40) which is considered representative of a relevant irradiation location, a relevant, three-dimensional, immediate surrounding region (38) is defined that extends downwards over at least three layers, in particular over at least one hundred layers, below the respective irradiation location (I - IV), and **in that**, as a measure for determining the thermal conductivity of the defined, immediate surrounding region (38) of a relevant irradiation location (I - IV), the amount of the relevant volume elements in the surrounding area (38) is taken into account, which elements are of the part of the moulded body that has already been solidified by means of remelting during irradiation of the relevant irradiation location (I - IV).

6. Method according to claim 5, **characterised in that**, in the relevant defined, three-dimensional, immediate surrounding region (38) of a relevant irradiation location, in each case the amount of volume elements (40) of the part of the moulded body (2) that has already been solidified by remelting is taken into account, which elements are in layers below the layer (34) of the considered irradiation location.

7. Method according to claim 6, **characterised in that** the amount of volume elements in the surrounding region (38) that are of the part of the moulded body that has already been solidified by remelting is also taken into account, which elements are in the layer of the currently considered irradiation location (I - IV).

8. Method according to any of the preceding claims, **characterised in that** irradiation parameter sets having irradiation parameters which depend on the relevant thermal conductivity of the defined immediate surrounding regions of the considered irradiation sites are stored in association with geometric description data about said irradiation locations, such that said sets can be read out and processed by the control apparatus (28) in order to control the irradiation processes.

9. Method according to any of the preceding claims, **characterised in that** the temporal sequence of the irradiation locations during the irradiation of a relevant layer (34) is selected taking into account the measure determined from the geometric description data for the thermal conductivity of the defined, three-dimensional, immediate surrounding regions of the irradiation location.

10. Device which is designed to carry out the method according to any of the preceding claims, comprising a process chamber housing (8) having a carrier platform (14) for supporting the moulded body to be produced, a layer preparation apparatus (16) for preparing respective powder layers on the carrier platform (14), an irradiation apparatus (18) for irradiating the relevant, most recently prepared powder layer on the carrier platform (14) on the basis of geometric description data of the moulded body to be produced, and a control apparatus (28) for controlling the irradiation apparatus (18), **characterised in that** the control apparatus is designed and programmed to control the irradiation apparatus such that the locationally selective energy input per unit of time at a relevant irradiation location (I - IV) on the relevant layer (34) takes place by means of correspondingly adjusting irradiation parameters, such as the energy density of the radiation at the radiation location, and/or the duration of the irradiation of the radiation location, depending on the thermal conductivity of a relevant defined, immediate, three-dimensional surrounding region (38) of the irradiation location (I - IV) that extends downwards over at least three layers, in particular over at least one hundred layers, below the relevant irradiation location (I - IV), which conductivity is determined on the basis of geometric description data of the moulded body to be produced.

11. Device according to claim 10, **characterised in that** the irradiation apparatus (18) has a laser (20) and a beam deflection unit (22) for deflecting, in a controlled manner, the laser beam emitted by the laser (24).

## Revendications

1. Procédé servant à fabriquer un corps moulé par élaboration en couches à partir de matériau en poudre, comprenant les étapes suivantes :
a) préparation d'une couche (34) à partir de matériau en poudre,
b) réchauffage de la couche (34) en irradiant de manière localement sélective la couche (34) conformément à un modèle de section transversale, associé à la couche (34), du corps moulé (2) conformément à des données de description de géométrie du corps moulé (2) d'un rayonnement contrôlé de sorte que le matériau en poudre soit solidifié par fusion en des zones contiguës conformément au modèle de section transversale du corps moulé (2),
c) préparation d'une prochaine couche à partir de matériau en poudre (34) sur la couche irradiée en dernier lieu, et
d) réchauffage de la couche (34) préparée en dernier lieu en irradiant de manière localement sélective la couche (34) conformément au modèle de section transversale, associé à ladite couche, du corps moulé d'un rayonnement contrôlé de sorte que le matériau en poudre soit solidifié par fusion en des zones contiguës conformément au modèle de section transversale du corps moulé (2), et
e) répétition multiple des étapes c) et d) au moins jusqu'à la finalisation de la structure du corps moulé (2), dans lequel l'apport en énergie localement sélectif ayant lieu par l'irradiation lors des étapes d'irradiation d) par unité de temps par rayonnement peut varier en fonction de l'emplacement d'irradiation respectif sur la couche de poudre (34),
**caractérisé en ce**
**que** lors des étapes d'irradiation d), l'apport en énergie localement sélectif par unité de temps au niveau d'un emplacement d'irradiation (I - IV) respectif sur la couche (34) respective est choisi en fonction de la capacité de dissipation de chaleur d'une zone environnante (38) de l'emplacement d'irradiation (I - IV) respective définie, directe, s'étendant sur au moins trois couches, en particulier sur au moins cent une couche vers le bas sous l'emplacement d'irradiation (I - IV) respectif, tridimensionnelle et est modulé automatiquement de manière correspondante par le réglage de paramètres d'irradiation, tels que la densité d'énergie du rayonnement au niveau de l'emplacement d'irradiation et/ou la durée de l'irradiation de l'emplacement d'irradiation, dans lequel la fraction volumique du matériau déjà consolidé par la fusion du matériau en poudre à l'intérieur de la zone environnante est définie à partir de données de description de géométrie du corps moulé en tant que mesure pour la capacité de dissipation de chaleur de la zone environnante définie, directe s'étendant sur au moins trois couches, en particulier sur au moins cent une couches vers le bas à l'intérieur de l'emplacement d'irradiation (I - IV) respectif, tridimensionnelle, de l'emplacement d'irradiation respectif, et dans lequel plus l'apport en énergie localement sélectif choisi par unité de temps au niveau de l'emplacement d'irradiation dans le cadre de tolérances éventuelles est important, plus la capacité de dissipation de chaleur de sa zone environnante (38) est importante.

2. Procédé selon la revendication 1, **caractérisé en ce que** l'irradiation localement sélective est réalisée par balayage commandé de la couche de poudre (34) respective avec un rayon laser (24) en faisceaux, dans lequel la puissance de rayonnement et/ou l'extension du point d'impact du rayon laser sur la couche de poudre (34) et/ou la vitesse de balayage de rayon au niveau de l'emplacement d'irradiation (I - IV) sont réglées en fonction de la capacité de dissipation de chaleur de l'environnement directe définie de l'emplacement d'irradiation (I - IV) respectif instantané.

3. Procédé selon la revendication 1 ou 2, **caractérisé en ce que** la mesure définie à partir des données de description de géométrie du corps moulé pour la capacité de dissipation de chaleur de la zone environnante définie, directe, tridimensionnelle de l'emplacement d'irradiation respectif est utilisée pour commander de manière automatique les paramètres d'irradiation à moduler au moyen d'un dispositif de commande (28) commandant l'opération d'irradiation.

4. Procédé selon la revendication 3, **caractérisé en ce que** les valeurs déterminées pour la capacité de dissipation de chaleur ou des valeurs dérivées sur cette base sont mémorisées en association avec des données de description de géométrie respectives des emplacements d'irradiation (I - IV) concernés de sorte qu'elles puissent être lues et traitées par le dispositif de commande (28) pour commander les opérations d'irradiation pendant le processus de construction.

5. Procédé selon l'une quelconque des revendications 1 à 4, **caractérisé en ce qu'**un modèle théorique du corps moulé (2) ou d'une zone de celui-ci est divisé conformément aux données en diverses couches, de préférence conformément aux diverses couches d'élaboration (34) pour définir la mesure pour la capacité de dissipation de chaleur des zones environnantes directes des emplacements d'irradiation (I - IV) considérés et lesdites couches (34) sont divisées de plus en une pluralité d'éléments de volume (40) avec une hauteur d'élément de volume correspondant à l'épaisseur de couche (d), dans lequel les éléments de volume (40) sont à associer aux emplacements d'irradiation et sont considérés comme représentatifs pour ceux-ci,
qu'une zone environnante (38) respective s'étendant sur au moins trois couches, en particulier sur au moins cent une couches vers le bas sous l'emplacement d'irradiation (I - IV) respectif, tridimensionnelle, directe est définie pour chaque élément de volume (40) considéré comme représentatif pour un emplacement d'irradiation concerné, et que la quantité des éléments de volume, situés respectivement dans la zone environnante (38), de la partie consolidée, déjà par fusion lors de l'irradiation de l'emplacement d'irradiation (I - IV) concerné, du corps moulé est prise en compte en tant que mesure pour la définition de la capacité de dissipation de chaleur de la zone environnante (38) définie directe d'un emplacement d'irradiation (I - IV) concerné.

6. Procédé selon la revendication 5, **caractérisé en ce que** respectivement la quantité des éléments de volume (40) de la partie déjà consolidée par fusion du corps moulé (2) est prise en compte dans la zone environnante (38) respective, définie, tridimensionnelle, directe d'un emplacement d'irradiation concerné, lesquels se situent dans des couches sous la couche (34) de l'emplacement d'irradiation considéré.

7. Procédé selon la revendication 6, **caractérisé en ce que** la quantité également des éléments de volume situés dans la zone environnante (38) de la partie déjà consolidée par fusion du corps moulé est prise en compte, lesquels se situent dans la couche de l'emplacement d'irradiation (I - IV) instantanément considéré.

8. Procédé selon l'une quelconque des revendications précédentes, **caractérisé en ce que** des jeux de paramètres d'irradiation sont mémorisés avec des paramètres d'irradiation, qui dépendent de la capacité de dissipation de chaleur respective des zones environnantes définies directes des emplacements d'irradiation considérés en association avec des données de description de géométrie desdits emplacements d'irradiation de sorte qu'ils puissent être lus et traités par le dispositif de commande (28) pour commander les opérations d'irradiation.

9. Procédé selon l'une quelconque des revendications précédentes, **caractérisé en ce que** la succession dans le temps des emplacements d'irradiation lors de l'irradiation d'une couche (34) respective est choisie en prenant en compte la mesure définie à partir des données de description de géométrie pour la capacité de dissipation de chaleur des zones environnantes définies, tridimensionnelles, directes des emplacements d'irradiation.

10. Dispositif, qui est mis au point pour mettre en œuvre le procédé selon l'une quelconque des revendications précédentes, comprenant un boîtier d'espace de processus (8) avec une plate-forme de support (14) servant à soutenir le corps moulé à fabriquer, un dispositif de préparation de couches (16) servant à préparer des couches de poudre respectives sur la plate-forme de support (14), un dispositif d'irradiation (18) servant à irradier la couche de poudre préparée respectivement en dernier lieu sur la plate-forme de support (14) conformément aux données de description de géométrie du corps moulé à fabriquer et un dispositif de commande (28) servant à commander le dispositif d'irradiation (18),
**caractérisé en ce**
**que** le dispositif de commande est mis au point et est programmé pour commander le dispositif d'irradiation de telle sorte que l'apport en énergie localement sélectif par unité de temps au niveau d'un emplacement d'irradiation (I - IV) respectif sur la couche (34) respective est effectué en fonction de la capacité de dissipation de chaleur, définie sur la base de données de description de géométrie du corps moulé à fabriquer, d'une zone environnante (38) respective, définie, directe s'étendant sur au moins trois couches, en particulier sur au moins cent une couches vers le bas sous l'emplacement d'irradiation (I - IV) respective, tridimensionnelle, de l'emplacement d'irradiation (I - IV) en réglant de manière correspondante des paramètres d'irradiation, tels que la densité d'énergie du rayonnement au niveau de l'emplacement d'irradiation, et/ou la durée de l'irradiation de l'emplacement d'irradiation.

11. Dispositif selon la revendication 10, **caractérisé en ce que** le dispositif d'irradiation (18) présente un laser (20) et une unité de déviation de rayon (22) servant à dévier de manière commandée le rayon laser (24) émis par le laser.
